# EUROPEAN PATENT APPLICATION

(11) **EP 2 192 675 A1**
(43) Date of publication of application: **02.06.2010**
(21) Application number: 08170086.6
(22) Date of filing: 27.11.2008
(51) Int. Cl.: H02K 49/06, E05F 15/12

(54) **Hysteresis brake**

(71) Applicant: Valeo Sicherheitssysteme GmbH, 85253 Erdweg (DE)
(72) Inventor: Orth, Dietmar, 85757 Karlsfeld (DE); Kummer, Frank, 86150 Augsburg (DE); Drescher, Christian, 85229 Markt Indersdorf (DE)
(74) Representative: Jacquot, Ludovic R. G.

(57) **Abstract**

A hysteresis brake has a magnet element (114) which generates a magnetic field and which is arranged on a shaft (112) so as to be rotatable together with the latter, and a hysteresis element (116) which is penetrated by the magnetic field of the magnet element (114). A Hall sensor (124) is provided which measures a magnetic field variation caused by the magnet element (114).

## Description

The invention relates to a hysteresis brake having a magnet element, which generates a magnetic field and which is arranged on a shaft so as to be rotatable together with the latter, and a hysteresis element, which is penetrated by the magnetic field of the magnet element.

In a hysteresis brake, a braking action is generated in that a magnetic field which penetrates a magnetizable body moves relative to the latter, so as to generate a continuous variation of the magnetization of the body on account of the changing flux line direction. The movement energy of the moving body is dissipated in this way. Hysteresis brakes are used for example in order to brake or to fix a drive shaft of a motor when the motor is switched off.

A hysteresis brake of said type is known for example from EP 1 940 012 A1. Said hysteresis brake is used in order to hold open an automatically opening vehicle door, for example a tailgate of a luggage compartment, when the electric motor which provides the opening action is switched off. In this case, the hysteresis brake acts on the shaft of the electric motor and brakes said shaft in order to prevent an uncontrolled closure of the vehicle door.

A state of a device which is connected to the drive shaft, for example the degree of opening of a vehicle door, can be easily determined from the number of rotations of a drive shaft of a motor. For this purpose, it is necessary to measure the rotation of the drive shaft.

It is an object of the invention to create a compact device which can firstly brake a shaft and which can secondly monitor a rotational movement of the shaft in a simple manner.

This is achieved in a hysteresis brake of the above-specified type in that a Hall sensor is provided which measures a magnetic field variation caused by the magnet element. In this way, the magnet element is used simultaneously for two different functions, specifically firstly as a braking element and secondly as a signal transducer for the Hall sensor for the purpose of position determination. This has the result that the hysteresis brake may be of extremely space-saving construction, and in particular, it is not necessary to provide installation space for an additional position sensor in the device in which the hysteresis brake is used. It is also advantageous that Hall sensors are of small construction and are robust and insusceptible to wear.

The magnetic field variation caused by the magnet element comprises the change in the field on account of the rotation of the magnet element, and the associated relative movement of the magnetic poles of said magnet element relative to the Hall sensor, but also the change in the magnetic field of the hysteresis element on account of the variation of its magnetization. Said magnetization is caused by the magnetic field of the magnet element and varies with the relative position of the magnet element with respect to the hysteresis element.

In order to measure the magnetic field variation by means of the Hall sensor, it is possible to use both the magnetic field of the magnet element directly and also the magnetic field generated by the magnetization of the hysteresis element.

Normally, the hysteresis element is arranged such that it does not rotate together with the shaft and the magnet element, but rather such that the magnet element performs a relative rotation with respect to the hysteresis element.

It is possible for the hysteresis element to be arranged between the magnet element and the Hall sensor in such a way that the hysteresis element partially shields the magnetic field of the magnet element, and as a result, the Hall sensor is not exposed to an excessively high field strength.

The magnet element preferably comprises a permanent magnet, for example in the form of a magnet disc, which is advantageously placed directly onto the shaft. In this way, it is possible in a simple manner to predefine a desired magnetization direction for the magnet element. It would however also be possible to use an electromagnet as a magnet element.

In one preferred embodiment of the invention, the hysteresis element annularly surrounds the magnet element in the radial direction.

In this case, the magnetization or the magnetic field of the magnet element is preferably aligned diametrically, such that the magnetic field penetrates the hysteresis element over as large an area of the latter as possible, and therefore a continuous re-magnetization of the hysteresis element takes place when the magnet element rotates.

The number of magnet segments of the magnet element can be selected by a person skilled in the art according to the specific configuration of the hysteresis brake. It is generally the case that the braking action can be increased by increasing the number of segments. In contrast, for the reliable detection of the rotation by the Hall sensor, it is necessary to ensure a sufficiently long penetration time with a magnetic field of constant polarization. The ideal number of magnet segments is therefore dependent *inter alia* on the desired braking action and the rotational speed of the shaft.

It is of course also possible to provide a plurality of Hall sensors.

According to a first preferred embodiment, the Hall sensor is arranged radially outside the hysteresis element, such that said Hall sensor is situated in the region of the periodically changing polarity of the magnetic field of the magnet element. In this way, it is possible for a magnetic field variation caused by the rotation of the magnet element to be reliably detected by the Hall sensor in the case of small field strengths.

In another preferred embodiment of the invention, the hysteresis element is embodied as an annular disc which is arranged at an axial distance to the magnet element.

In this case, too, the magnetization or the magnetic field of the magnet element may be aligned diametrically. It is thereby ensured that a large field proportion of the magnetic field of the magnet element penetrates the hysteresis element. It would however also be possible for the magnetization or the magnetic field of the magnet element to be aligned axially.

In this case, the Hall sensor is preferably arranged so as to be spaced apart from the magnet element in the axial direction, such that said Hall sensor is arranged in a region in which the flux line direction of the magnetic field varies periodically as a result of the rotation of the magnet element.

The Hall sensor may however also be situated radially or axially with respect to the magnet element independently of the arrangement of the hysteresis element. The Hall sensor is preferably fastened to a printed circuit board which extends perpendicularly with respect to the shaft. In this way, the structural size of the hysteresis brake can be kept small both in the axial direction and also in the radial direction.

The hysteresis element is preferably composed of soft iron or an AlNiCo alloy. Other materials which are suitable for hysteresis brakes may of course also be used.

The invention also relates to a device for automatically opening a vehicle door, having an electric motor and having a hysteresis brake as has been described above. Here, the hysteresis brake is arranged so as to brake the drive shaft of the electric motor, for example in order to prevent an undesired closure of the vehicle door. The Hall sensor measures the rotation of the drive shaft of the electric motor by means of the periodically varying magnetic field of the magnet element, and thereby indirectly the position in which the vehicle door is situated. Said data may be transmitted to control electronics and used for any desired purpose in the vehicle.

Further features and advantages of the invention can be gathered from the following description of two exemplary embodiments with reference to the appended drawings, in which:
Figure 1 shows a schematic section view through a hysteresis brake according to the invention according to a first embodiment, in a module with an electric motor;
Figure 2 shows a schematic section view through a hysteresis brake according to the invention according to a second embodiment, in a module with an electric motor;
Figure 3 shows a variant of the first embodiment; and
Figure 4 shows a variant of the second embodiment.

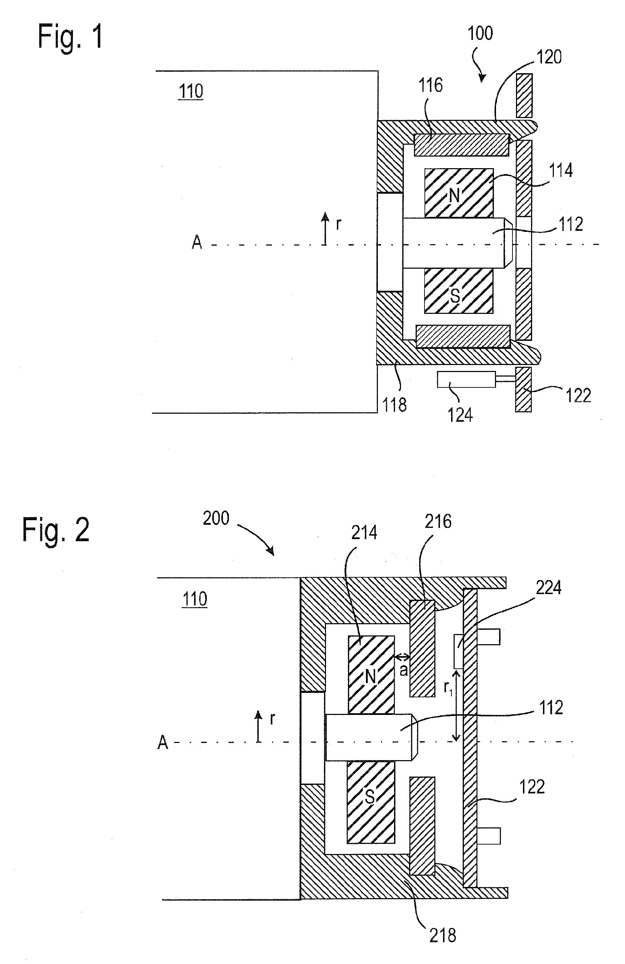

Figure 1 shows a hysteresis brake 100 in combination with an electric motor 110. A shaft 112, in this case the drive shaft of the electric motor 110, extends in the axial direction A out of an end side of the electric motor 110.

The shaft 112 preferably extends through the entire electric motor 110 and projects out at the other side of the electric motor 110, where said shaft 112 serves for example as a drive shaft for a device which brings about an automatic opening of a vehicle door, such as a tailgate of a luggage compartment (not shown).

A magnet element 114 is fastened to the shaft 112 in such a way as to rotate together with said shaft 112. Here, the magnet element 114 is a permanent magnet in the form of a magnet disc which is aligned perpendicular to the axial direction A, with diametrically running magnetization, as indicated by the poles N and S in Figure 1.

The number of magnet segments of the magnet element 114 is determined from the specific demands, and can be selected correspondingly by a person skilled in the art.

An annular hysteresis element 116 is arranged in such a way as to annularly surround the magnet element 114 in the radial direction r. The spacing between the outer diameter of the magnet element 114 and the inner diameter of the hysteresis element 116 and the extents of the magnet element 114 and of the hysteresis element 116 in the radial direction r and in the axial direction A are selected here such that the magnetic field of the magnet element 114 penetrates the hysteresis element 116 with such an intensity as to ensure a sufficient braking action for the shaft 112.

The hysteresis element 116 is composed for example of soft iron or an AlNiCo alloy. Other materials which are known for hysteresis elements may of course also be used.

The hysteresis element 116 is fastened to a housing 118 which is in turn fixedly connected to the end side of the electric motor 110. The housing 118 may for example annularly surround the hysteresis element 116, or it is for example possible for only individual arms 120 to be formed in the axial direction A, to which arms 120 the hysteresis element 116 is fastened, for example by means of latching.

Arranged at a small axial distance from the magnet element 114 and from the hysteresis element 116 is a printed circuit board 122 which is aligned perpendicularly with respect to the axial direction A and which is likewise fastened to the housing 118. At least one Hall sensor 124 is arranged on said printed circuit board 122. It is also possible for the electronic components required for the evaluation of the signal of the Hall sensor 124 to be provided on the printed circuit board 122.

As viewed in the axial direction A, the Hall sensor 124 is situated at the level of the magnet element 114 and of the hysteresis element 116, such that said Hall sensor 124 can measure the alternating polarity of the magnetic field of the magnet element 114 when the shaft 112 rotates.

The Hall sensor 124 is arranged on the printed circuit board 122 in such a way as to be situated, as viewed in the radial direction r, outside the housing 118 and above all outside the hysteresis element 116. The magnetic field of the magnet element 114 is therefore partially shielded from the Hall sensor 124 by the hysteresis element 116.

Figure 2 illustrates a second embodiment. The hysteresis brake 200 differs from the embodiment described immediately above merely in the arrangement of the magnet element, of the hysteresis element and of the Hall sensor. Identical or functionally equivalent components are therefore denoted by the reference symbols which have already been used.

In this case, too, the magnet element 214 is embodied as a magnet disc which is placed directly onto the shaft 112 of the electric motor 110 and which rotates together with the latter.

The hysteresis element 216 is embodied as an annular disc which is arranged at an axial distance a from the magnet element 214 and so as to be perpendicular with respect to the axial direction A, specifically, in this example, on that side of the magnet element 214 which faces away from the electric motor 110.

The permanent magnet of the magnet element 214 has magnetization in the axial direction A, such that the magnetic field of the magnet element 214 penetrates the hysteresis element 216 effectively. The magnet element 214 has a plurality of zones of different polarity (indicated in Figure 2), such that a magnetic field with alternating polarity is generated at a location radially outwards from the shaft 112 when the magnet element 214 rotates.

Arranged at a radial distance r₁ from the shaft 112, at the level both of the surface of the magnet element 214 and also of the hysteresis element 216, is a Hall sensor 224 which measures the magnetic field of the magnet element 214. As in the example described immediately above, said Hall sensor 224 is fastened to a printed circuit board 122 which may also support evaluating electronics.

The housing 218 is designed so as to receive, and hold, both the hysteresis element 216 and also the printed circuit board 122 which is arranged perpendicular to the axial direction A.

When the shaft 122 rotates, the Hall sensor 224 is exposed to a periodically varying magnetic field, since the zones of different polarity of the magnet element 124 move with respect to the Hall sensor 124. This results in a periodically varying signal which makes it possible, for example, to determine the number of rotations and the rotational speed of the shaft 112.

It would also be possible to arrange the hysteresis element 216 on the other side of the magnet element 214, in this case, in Figure 2, between the electric motor 110 and the magnet element 214, if the Hall sensor 224 is designed for the field strengths which are provided by the magnet element 214 without shielding from the hysteresis element 216.

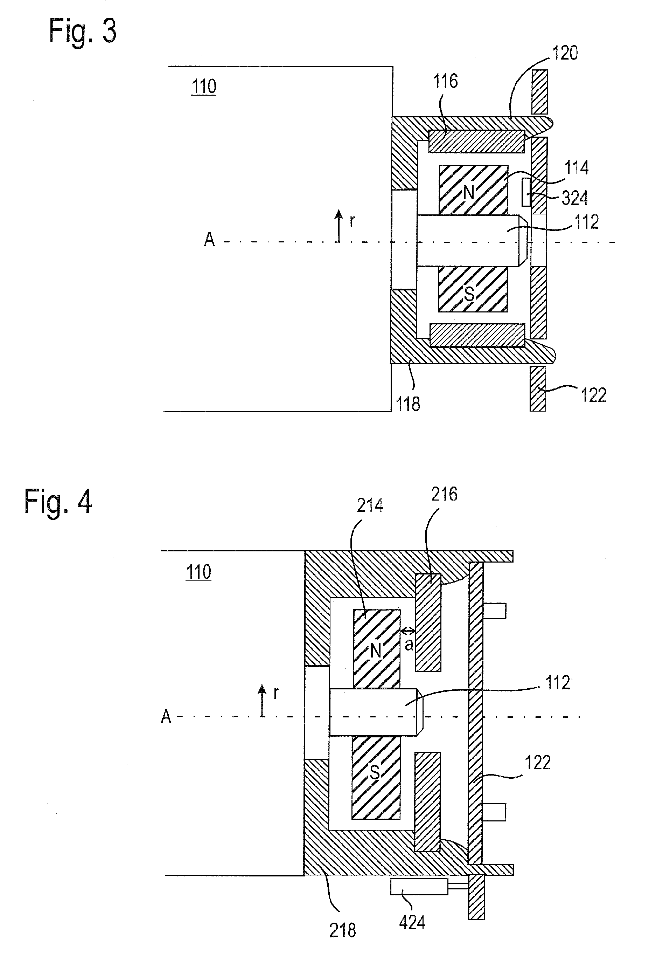

In the variant shown in Figure 3, the Hall sensor 324 is situated at an axial distance from the magnet element 114, while the hysteresis element 116 is arranged radially around the magnet element 114.

In this case, the Hall sensor 324 is exposed to the full field strength of the magnet element 114. It would also be possible for the Hall sensor 324 to be arranged radially outside the hysteresis element 116 but at an axial distance both from the magnet element 114 and also from the hysteresis element 116.

In the variant of the second embodiment illustrated in Figure 4, the Hall sensor 424 is situated radially outside the disc-shaped hysteresis element 216.

Here, the Hall sensor 424 may directly measure the magnetic field of the magnet element 214, or else that of the hysteresis element 216.

In the example shown, the Hall sensor 424 is arranged approximately at the axial level of the hysteresis element 216, though could also be positioned at any desired location in the axial direction A, in particular at the level of the magnet element 214 or axially outside both the hysteresis element 216 and also the magnet element 214.

In all of the variants described, the Hall sensor may use the magnetic field of the magnet element itself, or else the magnetic field caused by the magnetization of the hysteresis element, to detect the rotation of the shaft 112.

It is of course also possible for a plurality of Hall sensors to be provided in each case.

All the features of the individual embodiments may be freely exchanged with one another, or combined with one another, at the discretion of a person skilled in the art.

## Claims

1. Hysteresis brake, having
a magnet element (114; 214) which generates a magnetic field and which is arranged on a shaft (112) so as to be rotatable together with the latter, and
a hysteresis element (116; 216) which is penetrated by the magnetic field of the magnet element (114; 214),
**characterized in that** a Hall sensor (124; 224) is provided which measures a magnetic field variation caused by the magnet element (114; 214).

2. Hysteresis brake according to Claim 1, **characterized in that** the hysteresis element (116; 216) is situated between the magnet element (114; 214) and the Hall sensor (124; 224).

3. Hysteresis brake according to one of the preceding claims, **characterized in that** the magnet element (114; 214) comprises a permanent magnet.

4. Hysteresis brake according to one of the preceding claims, **characterized in that** the magnetization of the magnet element (114) is aligned diametrically.

5. Hysteresis brake according to one of the preceding claims, **characterized in that** the hysteresis element (116) annularly surrounds the magnet element (114) in the radial direction (r).

6. Hysteresis brake according to one of Claims 1 to 4, **characterized in that** the hysteresis element (216) is embodied as an annular disc which is arranged at an axial distance (a) from the magnet element (214).

7. Hysteresis brake according to one of the preceding claims, **characterized in that** the Hall sensor (124; 424) is arranged radially outside the hysteresis element (116).

8. Hysteresis brake according to one of the preceding claims, **characterized in that** the Hall sensor (224; 324) is arranged so as to be spaced apart from the magnet element (214) in the axial direction (A).

9. Hysteresis brake according to one of the preceding claims, **characterized in that** the Hall sensor (124-424) is fastened to a printed circuit board (122) which extends perpendicularly with respect to the shaft (112).

10. Hysteresis brake according to one of the preceding claims, **characterized in that** the hysteresis element (116; 216) is composed of soft iron or an AlNiCo alloy.

11. Hysteresis brake according to one of the preceding claims, **characterized in that** the Hall sensor (124-424) measures the magnetic field of the magnet element (114; 214).

12. Hysteresis brake according to one of the preceding claims, **characterized in that** the Hall sensor (124-424) measures the magnetic field of the hysteresis element (116; 216).

13. Device for automatically opening a vehicle door, having an electric motor (110) and having a hysteresis brake (100; 200) according to one of the preceding claims, with the hysteresis brake (100; 200) being arranged so as to brake a drive shaft (112) of the electric motor (110).
